# EUROPÄISCHE PATENTSCHRIFT

(11) **EP 0 993 382 B1**
(45) Veröffentlichungstag und Bekanntmachung des Hinweises auf die Patenterteilung: **18.12.2002**
(21) Anmeldenummer: 98933469.3
(22) Anmeldetag: 07.05.1998
(51) Int. Cl.: B60G 9/00, B60G 7/00

(54) **ACHSAUFHÄNGUNG FÜR STARRACHSEN IN FAHRZEUGEN**
AXLE SUSPENSION FOR RIGID AXLES IN AUTOMOBILES
SUSPENSION D'ESSIEU POUR ESSIEUX RIGIDES DE VEHICULES

(43) Veröffentlichungstag der Anmeldung: 19.04.2000
(73) Patentinhaber: ZF Lemförder Metallwaren AG, 49448 Lemförde (DE)
(72) Erfinder: COSSMANN, Uwe, D-49545 Tecklenburg (DE); BUBLIES, Holger, D-49078 Osnabrück (DE); BUHL, Reinhard, D-49163 Bohmte (DE)
(86) Internationale Anmeldenummer: DE9801269
(87) Internationale Veröffentlichungsnummer: WO99058354

(56) Entgegenhaltungen:
- WO-A-97/00176
- DE-A- 2 461 095
- DE-U- 9 218 307
- GB-A- 2 150 090
- US-A- 4 334 693
- US-A- 5 507 093
- US-A- 5 516 130

## Beschreibung

Die Erfindung bezieht sich auf eine Achsaufhängung für Starrachsen in Fahrzeugen, insbesondere Nutzkraftfahrzeugen, nach dem Oberbegriff des Patentanspruches 1.

Eine derartige Achsaufhängung ist beispielsweise aus WO 97/00176 A1 bekannt.
Die in dieser Schrift offenbarte Achsaufhängung für Starrachsen weist zur Achsführung auf jeder Fahrzeugseite etwa auf gleicher Höhe wenigstens einen sich in Fahrzeuglängsrichtung erstreckenden, die Fahrzeugachse mit dem Fahrzeugaufbau vertikal beweglich verbindenden Längslenker und davon in der Höhenlage abweichend einen einerseits mit der Fahrzeugachse und andererseits mit dem Fahrzeugaufbau gelenkig verbundenen Mehrfachlenker als.seitlichen Wank- und Kippbewegungen durch Torsionsspannungen entgegenwirkende Stabilisierungseinrichtung auf. Der Mehrfachlenker ist ein verwindbarer, sowohl die Achsrührung als auch die Stabilisierung integrierender Vierpunktlenker, der in jeweils zwei in Fahrzeugquerrichtung einen Abstand voneinander aufweisenden Gelenken einerseits mit der Fahrzeugachse und andererseits mit dem Fahrzeugaufbau verbunden ist.
Der Vierpunktlenker ist oberhalb der Fahrzeugachse an dieser angelenkt. Er kann gemäß der WO 97/00176 A1 als ein verwindbares Kreuz, als ein Flächentragwerk oder als verwindbare Rahmenkonstruktion mit definierter Kennlinie ausgeführt sein.
Die Anbindung des Vierpunktlenkers an den Fahrzeugaufbau beziehungsweise an die Fahrzeugachse erfolgt über Kugelgelenke.

Der Erfindung liegt die technische Problemstellung zugrunde, eine Achsaufhängung nach dem Stand der Technik bezüglich des Gewichtes und der Stabilität zu optimieren und gleichzeitig die Ausfallsicherheit der Achsaufhängung insgesamt zu erhöhen.

Gelöst wird diese Problemstellung mit den kennzeichnenden Merkmalen des Patentanspruches 1.

Nach der vorliegenden Erfindung ist der oberhalb der Fahrzeugachse einerseits mit der Fahrzeugachse und andererseits mit dem Fahrzeugaufbau gelenkig verbundene Vierpunktlenker als ein verwindbares Kreuz ausgeführt und jeweils über zwei in Fahrzeugquerrichtung einen Abstand voneinander aufweisende Gelenke einerseits mit der Fahrzeugachse und andererseits mit dem Fahrzeugaufbau verbunden. Die Arme des insgesamt als einstückiges Schmiedeteil ausgeführten Vierpunktlenkers sind als Biegeträger mit einem beispielsweise runden, annähernd rechteckförmigen oder ähnlichen Querschnitt ausgeführt. Einer dieser Arme weist erfindungsgemäß eine Sollbruchstelle auf, die vorzugsweise an einem der achsseitigen Arme vorzusehen ist. Diese Sollbruchstelle kann bei der Fertigung unmittelbar in den entsprechenden Arm eingebracht werden, sodaß hierfür kein zusätzlicher Herstellungsaufwand notwendig wird.
Der Arm weist dabei im Bereich der Sollbruchstelle einen Querschnitt auf, der unter Beachtung eines festgelegten Sicherheitsfaktors größer ist, als der für die zu erwartenden Belastungen des Vierpunktlenkers erforderliche Querschnitt.
Ein wesentlicher Vorteil der vorliegenden Lösung besteht darin, daß auch bei Achsbelastungen weit oberhalb der zu erwartenden maximalen Anforderungen und einer damit möglicherweise verbundenen Zerstörung des Vierpunktlenkers dies zuerst im Bereich der Sollbruchstelle und damit kontrollierbar erfolgen würde.
Erfindungsgemäß ist aber selbst in einem solchen Extremfall eine Achsführung noch immer gewährleistet, weil an der Fahrzeugachse immer noch einer der beiden Arme des Vierpunktlenkers befestigt ist, sodaß das Fahrzeug beispielsweise ohne Fremdunterstützung zur nächstgelegenen Werkstatt gefahren werden kann.

Ein besonderer Vorteil der erfindungsgemäßen Ausbildung liegt in der Möglichkeit der Verwendung bereits vorhandener Gelenkanschlüsse beziehungsweise der Substitution mehrerer Achsführungselemente (Längslenker) nach dem Stand der Technik durch einen einzigen erfindungsgemäßen Vierpunktlenker.
Bei einer erfindungsgemäßen Achsaufhängung ist es möglich, die Wankneigung des Fahrzeuges sehr einfach und genau zu bestimmen, sodaß bei gleichzeitiger Gewichtsoptimierung des Vierpunktlenkers dieser optimal auslegbar ist. Gegenüber bekannten Ausführungen lassen sich mit einem erfindungsgemäßen Vierpunktlenker deutlich größere Kräfte und Drehmomente aufnehmen.
Damit einhergehend ist die erfindungsgemäße Achsaufhängung gegenüber bekannten Ausbildungen kostensparend, weil sie weniger Einzelteile aufweist und weniger Montagearbeit erfordert.

Weitere Ausgestaltungen der Erfindung sind Gegenstand der Unteransprüche.

So wird vorgeschlagen die Gelenke beispielsweise als Kugelgelenke mit zwischen dem Gelenkgehäuse und dem Kugelstück angeordnetem Elastomer auszuführen. Diese Molekulargelenke sind durch Auswahl eines Elastomers mit entsprechender Shorehärte den zu erwartenden Belastungen entsprechend anpaßbar. Darüber hinaus können innerhalb des Elastomers und / oder des Gehäuses beziehungsweise am Innenteil des Gelenkes zumindest bereichsweise Ausnehmungen vorgesehen sein, die eine gezielte Beeinflussung der Gelenkcharakteristik bewirken. So können die Molekulargelenke beispielsweise in einer Richtung eine geringe Dämpfung und in wenigstens einer versetzt hierzu gelegenen Richtung eine größere Dämpfung aufweisen. Neben den zuvor beschriebenen Kugelgelenken sind selbstverständlich auch weitere Gelenkarten, wie beispielsweise Zapfengelenke oder andere für den vorliegenden Einsatzfall denkbar.

Gedacht ist erfindungsgemäß insbesondere auch daran, die Gelenke und den diese aufnehmenden Vierpunktlenker als ein Baukastensystem mit den Belastungen entsprechend austauschbaren Einzelteilen auszubilden. Je nach Kundenforderungen können somit Gelenke und Vierpunktlenker aufeinander abgestimmt werden. Hierfür werden die Gelenke mit einem standardisierten Außendurchmesser und die Gelenkaufnahmen der Arme des Vierpunktlenkers mit standardisierten Innendurchmessern versehen.
Somit setzen die Molekulargelenke und der metallische Grundkörper des Vierpunktlenkers den über die Achse eingeleiteten Kräften kumulative Gegenkräfte entgegen.

Weitere bevorzugte Ausführungsformen einer erfindungsgemäßen Achsaufhängung für Starrachsen in Fahrzeugen sehen ein Stabilisierungsmoment des Vierpunktlenkers zwischen 10 und 60 kNm, vorzugsweise jedoch zwischen 40 und 50 kNm, ein Abstandsmaß der fahrzeugaufbauseitigen Gelenke des Vierpunktlenkers zwischen 300 und 700 mm, vorzugsweise jedoch etwa 500 mm, ein Abstandsmaß der fahrzeugachsseitigen Gelenke des Vierpunktlenkers zwischen 300 und 700 mm, vorzugsweise jedoch etwa 350 mm oder ein Abstandsmaß zwischen den fahrzeugaufbauseitigen und den fahrzeugachsseitigen Gelenken des Vierpunktlenkers zwischen 300 und 1000 mm, vorzugsweise jedoch etwa 550 mm vor.

Insgesamt wird mit einer erfindungsgemäßen Achsaufhängung ein kompaktes, den Anforderungen an schwere und schwerste Nutzkraftfahrzeuge gerecht werdendes System geschaffen, dessen besondere Vorteile in einem flexibel kombinierbaren Vierpunktlenker bestehen, der höchsten Sicherheitsanforderungen entspricht. Weiterhin ist es mit einer erfindungsgemäßen Achsaufhängung erstmals gelungen, durch die geometrisch bestimmbare Anordnung des Drehzentrums eines Vierpunktlenkers, entsprechend der Lage des Kreuzpunktes der Arme, ein passives Eigenlenkverhalten der Achse gezielt erzeugen zu können. Hieraus ergeben sich Vorteile, wie beispielsweise ein verbessertes Lenkzielverhalten, ein verbessertes Lastwechselverhalten, ein geringerer Reifenverschleiß und eine Reduzierung der Belastung anderer Fahrwerkskomponenten durch Vermeidung einer überbestimmten Statik des Systems. Durch die Anordnung des Vierpunktlenkers oberhalb der Fahrzeugachse ergibt sich ferner eine größere Bodenfreiheit, die beispielsweise bei Fahrzeugen im Baustelleneinsatz von erheblicher Bedeutung ist.

Selbstverständlich können die vorstehend genannten und die nachfolgend noch zu erläuternden Merkmale der Erfindung nicht nur in der jeweils angegebenen Kombination, sondern auch in anderen Kombinationen oder in Alleinstellung verwendet werden, ohne dabei den Rahmen der Erfindung zu verlassen.

In den Zeichnungen sind Ausführungsbeispiele der Erfindung teils schematisch dargestellt.
Es zeigen:
- **Figur 1:**: eine räumliche Anordnung einer erfindungsgemäße Achsaufhängung,
- **Figur 2:**: einen Vierpunktlenker in dreidimensionaler Darstellung.

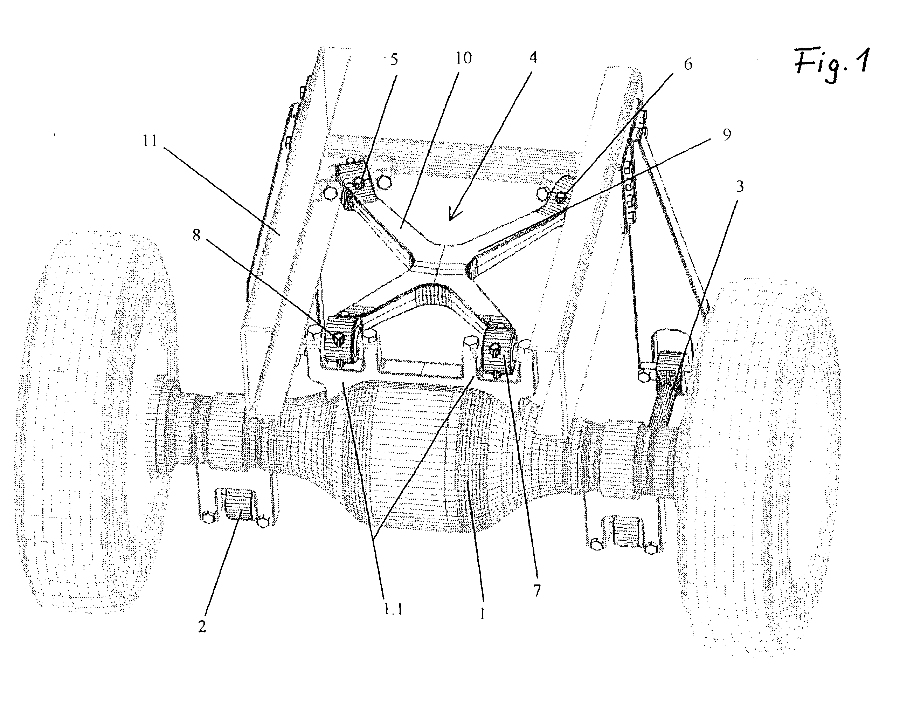

In den Ausführungsbeispielen ist die Fahrzeugachse 1 an beiden Fahrzeugseiten mit einem erheblichen Abstand von der Längsmitte des Fahrzeuges durch Längslenker 2 und 3 und in der Fahrzeugmitte durch einen oberhalb der Fahrzeugachse angeordneten
Vierpunktlenker 4 mit dem Fahrzeugaufbau verbunden. Die Fahrzeugachse vollzieht bei der gezeigten Ausführung Wankbewegungen, das heißt Bewegungen um eine annähernd in Fahrzeuglängsrichtung gelegene Achse, von etwa ±6°.
Der Fahrzeugaufbau ist in der Figur 1 bereichsweise schematisch dargestellt. In der Figur 1 ist die Anbindung des Vierpunktlenkers an den Fahrzeugrahmen 11 gezeigt. Die Gelenkverbindungen der Längslenker 2 und 3 befinden sich unterhalb der Fahrzeugachse 1, während der Vierpunktlenker 4 oberhalb der Fahrzeugachse 1 in einem gegenüber den Längslenkern 2 und 3 unterschiedlichen Höhenniveau angeordnet ist. Alle Gelenkverbindungen sind kardanisch beweglich ausgerührt und bestehen aus Molekulargelenken.
Der Vierpunktlenker 4 besteht aus zwei stabilen Armen 9 und 10 in sich kreuzender Anordnung und ist als ein einteiliges Schmiedeteil mit annähernd rechteckförmigem Querschnitt ausgeführt. Seine Verwindung unterliegt einer definierten Kennlinie. Die Auslegung des Querschnittes der Arme kann bei vorgegebenem Widerstandsmoment "W" in einfacher Weise nach der folgenden Formel erfolgen: W = b h² / 6. Darin ist "b" die Breite und "h" die Höhe des Armquerschnittes.
Die Arme 9 und 10 sind über die Gelenke 5 und 6 an der Fahrzeugkarosserie befestigbar und mit den an den anderen Enden der Arme 9 und 10 angeordneten Gelenken 7 und 8 an der Fahrzeugachse 1 bzw. an je einem mit der Fahrzeugachse 1 verbundenen Stützkörper 1.1 befestigt. Diese Ausbildung des Vierpunktlenkers 4 wirkt Wankbewegungen der Fahrzeugachse 1 entgegen. Die auftretende Verwindung des Vierpunktlenkers ruft durch Torsionsspannungen Rückstellkräfte für die Wiederherstellung der Nullage hervor.

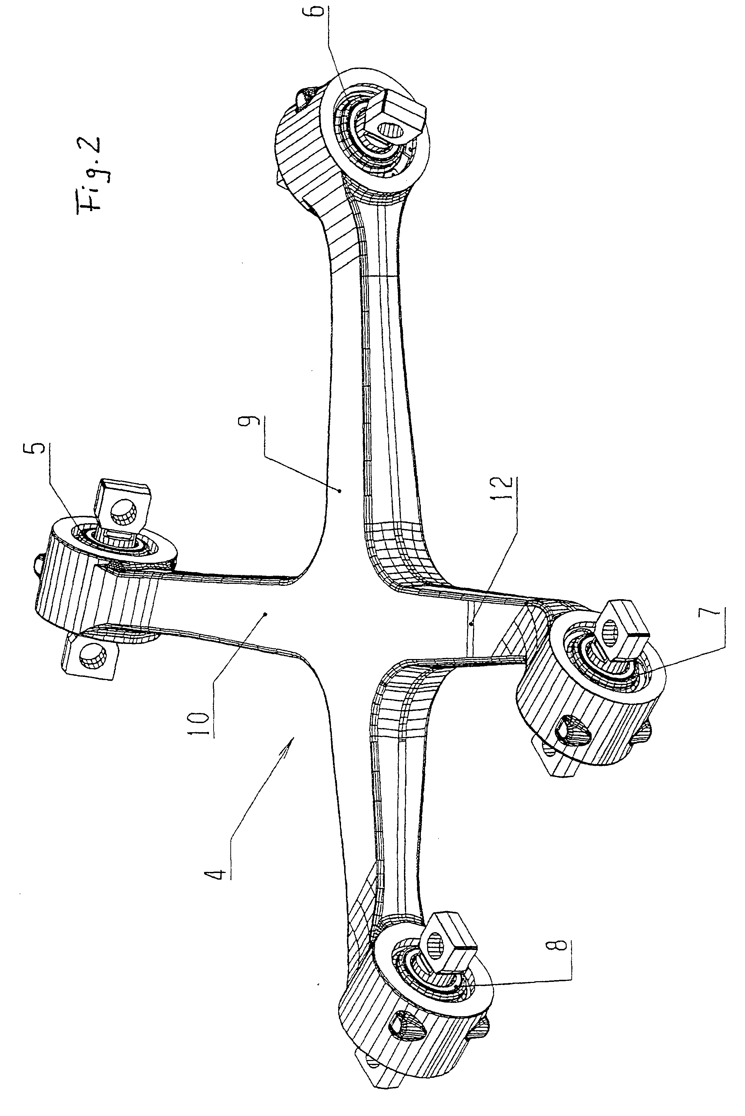

In der Figur 2 ist ein erfindungsgemäßer Vierpunktlenker in X-Form in einer dreidimensionalen Ansicht dargestellt. An den Armenden des X-förmigen Kreuzes sind die Gelenke 5 und 6 für die Befestigung an der Karosserie und die Gelenke 7 und 8 für die Befestigung an der Fahrzeugachse 1 angeordnet. In der Ausführung gemäß der Figur 2 ist eine Sollbruchstelle 12 an dem Arm 9 erkennbar dargestellt.
Das Querschnittsprofil der Arme ist vorliegend annähernd rechteckformig, wie es ebenfalls in der Zeichnungsfigur angedeutet ist. Es sind unterschiedliche Materialien einsetzbar.

### BEZUGSZEICHENLISTE:

- 1: Fahrzeugachse
- 1.1: Stützkörper
- 2: Längslenker
- 3: Längslenker
- 4: Vierpunktlenker
- 5: Gelenk
- 6: Gelenk
- 7: Gelenk
- 8: Gelenk
- 9: Arm
- 10: Arm
- 11: Fahrzeugrahmen
- 12: Sollbruchstelle

## Patentansprüche

1. Achsaufhängung für Starrachsen in Fahrzeugen, insbesondere Nutzfahrzeugen, bei der zur Achsführung auf jeder Fahrzeugseite etwa auf gleicher Höhe wenigstens ein sich in Fahrzeuglängsrichtung erstreckender, die Fahrzeugachse (1) mit dem Fahrzeugaufbau vertikal beweglich verbindender Längslenker (2, 3) und oberhalb der Fahrzeugachse (1) ein einerseits mit der Fahrzeugachse (1) und andererseits mit dem Fahrzeugaufbau gelenkig verbundener Vierpunktlenker (4) angeordnet ist, der als ein verwindbares Kreuz über jeweils zwei in Fahrzeugquerrichtung einen Abstand voneinander aufweisende Gelenke (5, 6), (7, 8) einerseits mit der Fahrzeugachse (1) und andererseits mit dem Fahrzeugaufbau verbunden ist,
**dadurch gekennzeichnet, daß**
die Arme (9, 10) des insgesamt als einstückiges Schmiedeteil ausgeführten Vierpunktlenkers (4) Biegeträger mit einem annähernd rechteckförmigen Querschnitt sind und einer dieser Arme (9 oder 10) eine Sollbruchstelle (12) aufweist.

2. Achsaufhängung für Starrachsen in Fahrzeugen nach Anspruch 1,
**dadurch gekennzeichnet, daß**
die Gelenke (5, 6), (7, 8) Kugelgelenke oder Zapfengelenke mit zwischen dem Gelenkgehäuse und dem Kugelstück angeordnetem Elastomer sind.

3. Achsaufhängung für Starrachsen in Fahrzeugen nach Anspruch 2,
**dadurch gekennzeichnet, daß**
die Gelenke (5, 6), (7, 8) und der diese aufnehmende Vierpunktlenker (4) ein Baukastensystem mit den Belastungen entsprechend austauschbaren Einzelteilen bilden.

4. Achsaufhängung für Starrachsen in Fahrzeugen nach einem der vorherigen Ansprüche,
**dadurch gekennzeichnet, daß**
das Stabilisierungsmoment des Vierpunktlenkers (4) zwischen 10 und 60 kNm, vorzugsweise jedoch zwischen 40 und 50 kNm beträgt.

5. Achsaufhängung für Starrachsen in Fahrzeugen nach einem der vorherigen Ansprüche,
**dadurch gekennzeichnet, daß**
das Abstandsmaß der fahrzeugaufbauseitigen Gelenke (5, 6) des Vierpunktlenkers (4) zwischen 300 und 700 mm, vorzugsweise jedoch etwa 500 mm beträgt.

6. Achsaufhängung für Starrachsen in Fahrzeugen nach Anspruch 5,
**dadurch gekennzeichnet, daß**
das Abstandsmaß der fahrzeugachsseitigen Gelenke (7, 8) des Vierpunktlenkers (4) zwischen 300 und 700 mm, vorzugsweise jedoch etwa 350 mm beträgt.

7. Achsaufhängung für Starrachsen in Fahrzeugen nach Anspruch 5,
**dadurch gekennzeichnet, daß**
das Abstandsmaß zwischen den fahrzeugaufbauseitigen und den fahrzeugachsseitigen Gelenken des Vierpunktlenkers zwischen 300 und 1000 mm, vorzugsweise jedoch etwa 550 mm beträgt.

## Claims

1. Axle suspension for rigid axles in vehicles, in particular commercial vehicles, in which for axle guidance there is disposed at each vehicle side approximately at the same height at least one longitudinal control arm (2, 3), which extends in vehicle longitudinal direction and connects the vehicle axle (1) in a vertically movable manner to the vehicle body, and above the vehicle axle (1) a four-point control arm (4), which is connected in an articulated manner on the one hand to the vehicle axle (1) and on the other hand to the vehicle body and which in the form of a flexible cross is connected on the one hand to the vehicle axle (1) and on the other hand to the vehicle body by, in each case, two joints (5, 6), (7, 8) spaced apart in vehicle transverse direction from one another,
**characterized in that**
the arms (9, 10) of the four-point control arm (4), which as a whole takes the form of an integral forged part, are bending beams with an approximately rectangular cross section and one of said arms (9 or 10) has a rupture joint (12).

2. Axle suspension for rigid axles in vehicles according to claim 1,
**characterized in that**
the joints (5, 6), (7, 8) are ball-and-socket joints or pivot joints having elastomer disposed between the joint housing and the ball piece.

3. Axle suspension for rigid axles in vehicles according to claim 2,
**characterized in that**
the joints (5, 6), (7, 8) and the four-point control arm (4), which receives the latter, form a modular system having individual parts, which are exchangeable in accordance with the loads.

4. Axle suspension for rigid axles in vehicles according to one of the preceding claims,
**characterized in that**
the stabilizing moment of the four-point control arm (4) is between 10 and 60 kNm, preferably however between 40 and 50 kNm.

5. Axle suspension for rigid axles in vehicles according to one of the preceding claims,
**characterized in that**
the clearance of the vehicle body-side joints (5, 6) of the four-point control arm (4) is between 300 and 700 mm, preferably however approximately 500 mm.

6. Axle suspension for rigid axles in vehicles according to claim 5,
**characterized in that**
the clearance of the vehicle axle-side joints (7, 8) of the four-point control arm (4) is between 300 and 700 mm, preferably however approximately 350 mm.

7. Axle suspension for rigid axles in vehicles according to claim 5,
**characterized in that**
the clearance between the vehicle body-side and the vehicle axle-side joints of the four-point control arm (4) is between 300 and 1000 mm, preferably however approximately 550 mm.

## Revendications

1. Suspension d'essieu pour essieux rigides de véhicules, en particulier de véhicules utilitaires, dans laquelle, pour le guidage d'essieu on agence, sur chaque côté du véhicule, plus ou moins à la même hauteur, au moins un bras oscillant longitudinal (2, 3) s'étendant dans la direction longitudinale du véhicule et reliant de manière à pouvoir se déplacer verticalement l'essieu de véhicule (1) à la carrosserie du véhicule et, au-dessus de l'essieu de véhicule (1), un bras oscillant à quatre points relié, d'une part, à l'essieu de véhicule (1) et, d'autre part, à la carrosserie de véhicule par articulation, qui est relié, sous la forme d'une croix déformable, via respectivement deux articulations (5, 6) (7, 8) s'écartant mutuellement dans la direction transversale au véhicule, d'une part, à l'essieu de véhicule (1) et, d'autre part, à la carrosserie du véhicule, **caractérisée en ce que** les bras (9, 10) du bras oscillant à quatre points (4), qui se présente dans l'ensemble sous la forme d'une pièce forgée d'une seule pièce, sont des poutres sollicitées à la flexion avec une section transversale approximativement rectangulaire et un de ces bras (9 ou 10) présente un point destiné à la rupture (12).

2. Suspension d'essieu pour essieux rigides de véhicules selon la revendication 1, **caractérisée en ce que** les articulations (5, 6), (7, 8) sont des articulations sphériques ou des articulations à pivot avec un élastomère aménagé entre le boîtier de l'articulation et la pièce sphérique.

3. Suspension d'essieu pour essieux rigides de véhicules selon la revendication 2, **caractérisée en ce que** les articulations (5, 6), (7, 8) et le bras oscillant à quatre points (4) qui les reçoit forment un système de jeu de construction dont les pièces individuelles sont échangeables en fonction des contraintes.

4. Suspension d'essieu pour essieux rigides de véhicules selon l'une quelconque des revendications précédentes, **caractérisée en ce que** le moment de stabilisation du bras oscillant à quatre points (4) se situe entre 10 et 60 kNm, mais de préférence entre 40 et 50 kNm.

5. Suspension d'essieu pour essieux rigides de véhicules selon l'une quelconque des revendications précédentes, **caractérisée en ce que** l'écartement des articulations côté carrosserie du véhicule (5, 6) du bras oscillant à quatre points (4) se situe entre 300 et 700 mm, mais de préférence à environ 500 mm.

6. Suspension d'essieu pour essieux rigides de véhicules selon la revendication 5, **caractérisée en ce que** l'écartement des articulations côté essieu de véhicule (7, 8) du bras oscillant à quatre points (4) se situe entre 300 et 700 mm, mais de préférence à environ 350 mm.

7. Suspension d'essieu pour essieux rigides de véhicule selon la revendication 5, **caractérisé en ce que** l'écartement entre les articulations côté carrosserie de véhicule et côté essieu de véhicule du bras oscillant à quatre points se situe entre 300 et 1000 mm, mais de préférence aux environs de 550 mm.
